# EUROPÄISCHE PATENTSCHRIFT

(11) **EP 1 697 803 B1**
(45) Veröffentlichungstag und Bekanntmachung des Hinweises auf die Patenterteilung: **16.04.2008**
(21) Anmeldenummer: 04804863.1
(22) Anmeldetag: 15.12.2004
(51) Int. Cl.: G05B 19/042

(54) **PROZESSMESSGERÄT MIT ERWEITERTER HARDWAREFEHLERERKENNUNG**
PROCESS MEASUREMENT APPARATUS FEATURING EXTENDED HARDWARE FAILURE RECOGNITION
APPAREIL DE MESURE DE PROCESSUS A RECONNAISSANCE D'ERREURS DE MATERIEL ETENDUE

(30) Priorität: 23.12.2003 DE 10361465
(43) Veröffentlichungstag der Anmeldung: 06.09.2006
(73) Patentinhaber: Endress u. Hauser GmbH u.Co. KG, 79689 Maulburg (DE)
(72) Erfinder: LALLA, Robert, 79541 Lörrach (DE); GESSER, Jean-Luc, F-68720 Illfurth (FR); GÖTZ, Arno, 77972 Mahlberg (DE); HUMPERT, Axel, 77866 Rheinau (DE)
(74) Vertreter: Andres, Angelika Maria
(86) Internationale Anmeldenummer: PCT/EP2004/053514
(87) Internationale Veröffentlichungsnummer: WO 2005/064424

(56) Entgegenhaltungen:
- EP-A- 1 246 033
- WO-A-01/18502
- WO-A-02/05199
- WO-A-03/081183
- US-A1- 2003 093 519
- US-A1- 2003 188 221

## Beschreibung

Die vorliegende Erfindung betrifft ein Prozessmessgerät, insbesondere ein Prozessmessgerät mit erweiterter Hardwarefehlererkennung.

Die Zertifizierung eines Prozessmessgerätes nach der Norm IEC61508; (SIL2) erfordert, dass am Gerät eventuell auftretende Hardware-Defekte mit hoher Wahrscheinlichkeit erkennt und als Fehlerzustand an einen Messwertempfänger signalisiert werden. Der statistische Anteil von Fehlern, die zu einer korrekten Signalisierung des Fehlerzustands an den Messwertempfänger führt, wird SFF (nach dem englischen Begriff Safe Failure Fraction) bezeichnet.

*Die Offenlegungsschrift* WO 2001/18502 A *offenbart eine Vorrichtung nach dem Laufzeitverfahren zur Bestimmung einer physikalischen Größe eines Mediums, wobei die Vorrichtung mit unterschiedlichen Sensoren einsetzbar ist. Die Vorrichtung weist einen Sensor, eine sensorspezifische Applikationseinheit, eine vom jeweils verwendeten Sensor im wesentlichen unabhängige Auswerteeinheit mit einem Prozessor und eine Kommunikationseinheit auf. Zum Erkennen von Hardwarefehlern enthält die genannte Schrift keine Hinweise.*

Der vorliegenden Erfindung liegt daher die Aufgabe zugrunde, ein Prozessmessgerät mit einer hohen Erkennungswahrscheinlichkeit im Falle von Hardwarefehlern bereitzustellen.

Statistische Analysen der Fehlerhäufigkeit haben ergeben, dass insbesondere Prozessoren und andere hochintegrierte Halbleiterbauteile, beispielsweise Speicher und ASICS, maßgeblich zur statistischen Gesamtausfallrate eines Prozessmessgerätes beitragen.

Die Aufgabe wird gelöst durch ein Prozessmessgerät mit einem ersten Prozessor, welcher in ersten Verarbeitungszyklen mit einem ersten Algorithmus eine Messwertverarbeitung durchführt; und einen zweiten Prozessor, welcher hauptsächlich für die Koordination und/oder Kommunikation zuständig ist,
wobei ferner der zweite Prozessor in Zeitabständen, die größer sind als der erste Verarbeitungszyklus einen Kontrolldatensatz aus dem ersten Prozessor ausliest, und anhand des Kontrolldatensatzes den ersten Algorithmus ausführt und die korrekte Funktion des ersten Prozessors verifiziert.

Der erste Prozessor ist vorzugsweise ein spezialisierter digitaler Signalprozessor mit sehr schnellen Verarbeitungszyklen. Der zweite Prozessor ist beispielsweise ein Microcontroller, der erheblich klangsamer arbeitet als der digitale Signalprozessor.

Der Kontrolldatensatz kann beispielsweise Rohmesswerte eines Sensors und Zustandsvariablen sowie die von dem ersten Prozessor daraus errechneten zugehörigen Ergebniswerte enthalten. Die Verifizierung erfolgt beispielsweise durch direkten Vergleich des aus dem ersten Prozessor ausgelesenen Ergebnis mit dem Ergebnis aus der Durchführung des ersten Algorithmus durch den zweiten Prozessor.

Der zweite Prozessor umfasst einen Programmspeicher. Zusätzlich kann der zweite Prozessor gemäß einer Weiterbildung der Erfindung seinen Programmspeicher mittels einer Prüfsumme oder einem CRC (nach englischen Begriff Cyclic Redundancy Check) regelmäßig verifizieren.

Der zweite Prozessor umfasst weiterhin einen Schreib/Lesespeicher, den der zweite Prozessor gemäß einer Weiterbildung der Erfindung mittels Testpattern regelmäßig auf statische Fehler überprüfen kann.

Der zweite Prozessor umfasst zudem ein Rechenwerk, einen Schreib/Lesespeicher, welchen der zweite Prozessor gemäß einer Weiterbildung der Erfindung mittels Prü falgorithmen regelmäßig auf statische Fehler überprüfen kann.

In einer Weiterbildung der Erfindung kann der zweite Prozessor die Daten im Programmspeicher des ersten Prozessors mit einem lokal gespiegelten Speicherbereich vergleichen und verifizieren.

Nach einem Aspekt der Erfindung kann der zweite Prozessor bekannte Konstanten im Datenspeicher des ersten Prozessors durch Vergleich mit lokal gespiegelten Werten verifizieren.

Nach einem weiteren Aspekt der Erfindung kann, der zweite Prozessor Konfigurationsregister des ersten Prozessors durch Vergleich mit lokal gespiegelten Werten regelmäßig verifizieren.

In einer Ausgestaltung der Erfindung umfasst das Prozessmessgerät eine 4..20 mA Zweitdraht-Schnittstelle. Optional kann eine Watchdog-Schaltung die Funktion des zweiten Prozessors und eines zugehörigen Taktgebers überprüfen und im Fehlerfall unabhängig von dem ersten Prozessor und dem zweiten Prozessor über den 4..20 mA Signalstrom einen Fehler signalisieren.

Die Erfindung wird nun an einem in den Figuren dargestellten Ausführungsbeispiel erläutert. Es zeigt:

Fig. 1: Ein Blockschaltbild der Geräteelektronik

eines erfindungsgemäßen Druckaufnehmers; und

Fig. 2: Ein Blockschaltbild zur Selbstüberwachung.

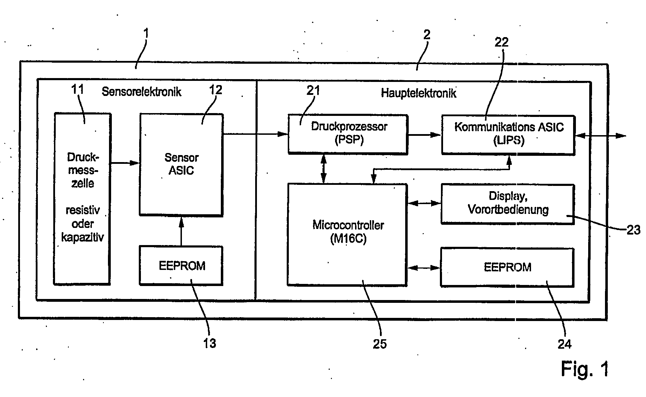

Die in Fig. 1. dargestellte modulare Geräteelektronik des erfindungsgemäßen Druckaufnehmers umfasst eine Sensorelektronik 1 und eine Hauptelektronik 2. Die Hauptelektronik 2, verarbeitet Sensorsignale, welche über eine serielle Schnittstelle von einer Sensorelektronik empfangen werden.

Die Sensorelektronik umfasst im einzelnen ein Sensor-ASIC 12, dessen wesentliche Aufgabe es ist, Druck- sowie Temperatursignale einer Druckmesszelle 11 bzw. eines Primärsensors entgegenzunehmen und ggf. ihre Signalpegel zu normieren. Dazu stehen - je nach Messprinzip des Primärsensors - eine Stromquelle für resistive Sensoren und eine kapazitive Schnittstelle für kapazitive Drucksensoren zur Verfü gung, an die jeweils absolut/relativ oder Differenzdruckmesszellen angeschlossen werden können. Die Normierung erfolgt über einstellbare Verstärker, sogenannte " Programmable Gain Amplifieres" (PGA), in den Ausführungen als Differenz und Absolutverstärker. Danach werden die normierten Werte analog/digital (A/D) gewandelt und ü ber eine serielle Schnittstelle an die Hauptelektronik 2 weitergegeben. Sensorspezifische Daten wie Kompensationskoeffizienten u. ä. auf einem Sensor-EEPROM 13 abgelegt.

Das ASIC 12 ist in der Lage, Überläufe in den internen Verstärkern und A/ D-Wandlern zu erkennen und diese ebenfalls über die serielle Schnittstelle in Form eines Fehlertelegramms an die Hauptelektronik 2 zu melden.

Die Hauptelektronik 2 umfasst im wesentlichen folgende Komponenten:

Einen Druckprozessor 21 (ASIC mit integriertem Digitalen Signal Prozessor (DSP)), der u. a. als serielles Interface zur Sensorelektronik 1 wirkt, deren Rohdaten empfängt, und daraus den Ausgangswert berechnet. Je nach Betriebsart kann der Ausgangswert entweder Druck, Füllstand oder Durchfluss repräsentieren. Das Rechenergebnis wird beispielsweise als pulsweitenmoduliertes Signal (PWM) bereitgestellt. Eine weitere Funktionalität des Prozessors 21 ist die Generierung des Taktsignals für die komplette Messumformerelektronik.

Die Hauptelektronik umfasst weiterhin einen Kommunikations-ASIC 22; dieser Baustein dient als Schnittstelle des Messumformers zur Außenwelt. In ihm integriert ist ein DC/DC-Wandler zur Stromversorgung des gesamten Gerätes und ein Stromsteller, der aus dem PWM-Signal des Druckprozessors den entsprechenden Stromwert auf eine 4-20mA Stromschleife einprägt. Weiterhin sind in ihm ein HART-Modem für die Kommunikation auf Feldebene, eine hochgenaue Spannungsreferenz sowie ein Hardware-Watchdog integriert.

Weiterhin umfasst die Hauptelektronik einen Microcontroller 25, welcher für die Initialisierung des Messprozessors benötigtwird. Im Regelbetrieb wird über ihn

die Vor-Ort-Bedienung mittels Taster bzw. Fernbedienung über HART realisiert. Zu diesem Zweck kann auch noch ein Display 23 vorgesehen sein.

Weitere Funktionen des Microcontrollers 25 können beispielsweise Fehlerverarbeitung, Umrechnung der Messdaten in vom Benutzer eingestellte Einheiten, Triggern eines Watchdogs im Kommunikations-ASIC, Protokollieren von Min/ Max-Werten und der Messbereichsüberschreitung, Summenzähler für den Modus " Durchfluss", und Nichtflüchtige Datenhaltung sein.

Beim Druckprozessor 21 handelt es sich um ein ASIC mit einem integrierten digitalen Signalprozessor. Seine Stärke liegt in der schnellen und äußerst energiesparenden Berechnung der Messwerte. Unter Vollast beträgt die Stromaufnahme des Druckprozessors ca. 600 µA.

Der Microcontroller 25 ist zwar prinzipiell auch in der Lage, diese Berechnungen durchzuführen, allerdings würde er bei gleicher Berechnungsgeschwindigkeit ein Vielfaches an Energie verbrauchen; zu viel für ein Gerät, das seine Versorgung aus einer 4-20mA Stromschleife bezieht. Eingesetzt wird der Microcontroller in den Bereichen, wo es nicht auf zeitkritische Berechnungen ankommt. Dadurch ist es mö glich, den Baustein mit einem stark reduzierten Takt zu betreiben, um den Stromverbrauch auf ein verträgliches Maß zu senken.

Bei der Geräteinitialisierung ist folgende Besonderheit zu beachten. Da es mehrere verschiedene Sensorbaugruppen und Hauptelektronikvarianten gibt, wäre es ein zu gro ßer Aufwand, für jede mögliche Kombination von Sensor und Elektronik eine passende Softwarelösung bereitzustellen. Dies wird dadurch umgangen, dass man die Software in zwei Teile auftrennt, nämlich in einen sensor- und einen applikationsspezifischen Teil.

Der sensorspezifische Teil ist auf der Sensorelektronik in einem Sensor-EEPROM 13 gespeichert. Erhält die Sensorik die ersten Taktsignale von der Hauptelektronik, so liest sie ihren Programmteil aus dem EEPROM aus und schickt ihn über die serielle Verbindung an die Hauptelektronik. Dort wird das Sensorprogramm vom Microcontroller 25 aus dem DSP 21 ausgelesen und mit dem applikationsspezifi-schen Programm verbunden, das er aus dem Programmspeicher der Hauptelektronik erhält. Die beiden Programmteile werden dann miteinander verbunden, d.h. die Offsets der Adressen im Speicher werden so verändert, dass verschiedene Variablen nicht die gleichen Speicherbereiche verwenden. Nach Abschluss dieses Vorgangs wird das nun komplettierte Programm zurück in den DSP geschrieben. Danach werden lediglich noch die Konfigurationsparameter der Messumformung in den Datenspeicher des DSP geladen, der Messumformer ist nun einsatzbereit und berechnet aus den daraufhin eintreffenden Rohdaten die Messwerte.

Die erfindungsgemäßen Druckaufnehmer erfüllen vorzugsweise die Anforderungen an Funktionale Sicherheit bis SIL 2 nach IEC 61508. Die Norm stellt quantitative Anforderungen hinsichtlich der Einhaltung von Mindestwerten für sicherheitstechnische Kenngrößen wie Safe Failure Fraction (SFF) an die Geräte. Zur Erfüllung der quantitativen Anforderungen (z.B. SFF > 90%) sind in der Regel zusätzliche Diagnosemaß nahmen und Überwachungsfunktionen im Gerät erforderlich. Über eine FMEDA (Failure Mode, Effects and Diagnostics Analysis) der Elektronik auf Komponentenebene mit nachfolgender Optimierung wurde die Selbstüberwachung, deren Konzept im folgenden beschrieben ist, als Beitrag zur Erfüllung der SIL2 Norm identifiziert.

Die Selbstüberwachung besteht aus einem Softwarepaket, mit dem unter anderem CRCs (Cyclic Redundancy Check) und Prüfsummen von RAM und ROM des Microcontrollers sowie des EEPROM realisiert werden.

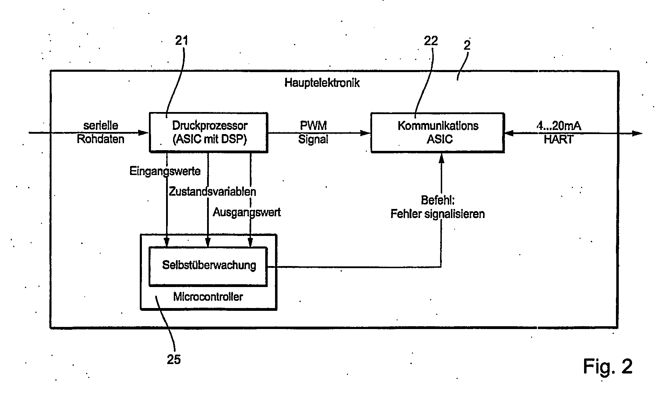

Die Selbstüberwachung umfasst weiterhin eine stichprobenartigen Kontrolle der Funktion des DSP durch eine Kontrollrechnung im Microcontroller. Dazu müssen, wie in Fig. 2 gezeigt, die Eingangswerte und Zustandsvariablen sowie der Ausgangswert aus dem DSP 21 ausgelesen werden. Aus den Eingangswerten und den Zustandsvariablen wird der Ausgangswert berechnet, den der DSP ausgeben müsste. Danach wird der gemessene mit dem berechneten Ausgangswert verglichen. Kommt es dabei zu Differenzen, so wird dies an übergeordnete Kontrollinstanzen in der Software des Messumformers gemeldet, die ihrerseits veranlassen, dass der Kommunikations-ASIC 22 ein Fehlersignal (HART) ausgibt. Anhand dieses Signals erkennt das Auswertegerät, an dem der Messumformer angeschlossen ist, den Gerätefehler und leitet die notwendigen Maßnahmen ein, wie eine Meldung zum Austausch des defekten Gerätes.

Der DSP 21 auf der Hauptelektronik führt sehr schnelle Berechnungen durch. Um nun diesen Baustein überwachen zu können, wird eine Baugruppe benötigt, die zumindest ebenso schnell die Berechnungen durchführen oder zumindest die Daten des DSP kann. Es wurde im vorliegenden Ausführungsbeispiel die Selbstüberwachung durch den Microcontrollers 25 gewählt. Diese Lösung beinhaltet die Kontrollrechnung seitens des Microcontrollers 25. Sie kommt ohne zusätzliche Hardware aus und sorgt dabei noch mit diversitärer Hardware für eine erweiterte Sicherheit. Die geringere Geschwindigkeit des Microcontrollers 25 verhindert es aber, die Berechnungen des DSP in Echtzeit durchzuführen. Dies ist zu berücksichtigen.

Der Microcontroller 25 führt daher nur Stichproben durch. Der einzig zeitkritische Vorgang ist dabei das Einlesen der Zustandsvariablen (zwischengespeicherte Werte des letzten Meßzyklus) und der Druck- und Temperaturrohdaten der Sensorelektronik sowie des berechneten Ausgangswertes des DSP 21. Die nachfolgende Berechnung des Ausgangswertes im µC ist praktisch zeitunabhängig, sie kann beliebig oft durch andere Programmteile unterbrochen werden.

Die Selbstüberwachung besteht in der Hauptsache aus drei Programmteilen:

Einer Hauptroutine, der Erfassung der Messwerte, und einer eigenständigen Berechnung mit anschließendem Vergleich. Die komplette Selbstüberwachung ist in Form von Zustandsmaschinen realisiert, wobei für die Erfassung und die Berechnung absichtlich zwei getrennte Prozesse eingesetzt werden. Dies ermöglicht eine unterschiedliche Priorisierung der beiden Vorgänge auf Interruptebene. Die Messwerterfassung bedarf einer hohen Priorität, um einen kompletten, gültigen Datensatz in der gegebenen Zeit einlesen zu können. Liefe dieser Prozess auf einer niedrigeren Ebene, würde die Selbstüberwachung nicht funktionieren, da es aufgrund von Unterbrechungen nie zu einem kompletten Datensatz käme. Im Gegensatz dazu braucht die Berechnung keine hohe Priorität, da sie keinem Zeitzwang unterliegt.

Im sensor- und applikationsspezifischen Programm gibt es jeweils Variablen, die den Wert der vorherigen Messung enthalten (Dämpfungswerte, Rauschfilter). Dabei ist zu beachten, dass sich diese Werte sehr schnell ändern, da ein kompletter Programmdurchlauf im DSP weniger als 10 ms dauert. Für die Kontrollrechnung sind die Zahlenwerte zum relevanten Zeitpunkt erforderlich, da sonst ein bitgenauer Vergleich nicht möglich ist. Dies wird durch schnelles Einlesen der betroffenen Variablen unter Verwendung von "Inline-Code" erreicht, also mit optimiertem Code auf Assembler-Ebene, der auf das Aufrufen von Registern und langwierige Stackoperationen verzichtet.

Jedes neue Datenpaket, das den DSP erreicht, löst einen Interrupt aus, der sich auch für die Synchronisation der Selbstüberwachung einsetzen lässt. In der Interrupt-Routine wird bei jedem Aufruf automatisch ein Zähler (Framecounter) inkrementiert. Als zusätzliche Funktionalität ist das Einlesen der Statusvariablen bei einem bestimmten Stand des Framecounters integriert.

Die Messwerterfassung beinhaltet das Einlesen der Druck- und Temperaturwerte des Sensor-ASIC, die zwischengespeicherten Ergebnisse der vorangegangenen Berechnung sowie den berechneten Ausgangswert des DSP. Nach dem Einlesen der Werte ist zu überprüfen, ob die eingelesenen Werte, tatsächlich den gleichen Messzeitpunkt repräsentieren.

Anschließend wird das DSP-Programm vom Microcontroller 25 ausgeführt, um die Kontrollrechnung anhand der eingelesenen Daten durchzufüren. Nach dem Ende der Kontrollrechnung findet ein Vergleich von Rechen- und Messwert statt. Stellt der Microcontroller eine zu große Differenz zwischen Rechen- und Messwert fest, wird das Kommunikations-ASIC angewiesen, einen Fehlerstrom auszugeben und bei Bedarf noch eine Fehlermeldung über HART auszugeben.

## Patentansprüche

1. Prozessmessgerät mit einem ersten Prozessor (21) zum Durchführen einer Messwertverarbeitung in ersten Verarbeitungszyklen mit einem ersten Algorithmus; **gekennzeichnet durch** einem zweiten Prozessor (25) zur Wahrnehmung von Koordinations- und/oder Kommunikationsaufgaben, wobei ferner der zweite Prozessor (25) mit Mitteln zum Auslesen eines Kontrolldatensatzes aus dem ersten Prozessor (21) in Zeitabständen, die größer sind als der erste Verarbeitungszyklus, und zum Ausführen des ersten Algorithmus anhand des Kontrolldatensatzes, zum Verifizieren der korrekten Funktion des ersten Prozessors, vorgesehen ist.

2. Prozessmessgerät nach Anspruch 1, wobei der Kontrolldatensatz Rohmesswerte eines Sensors und Zustandsvariablen sowie die von dem ersten Prozessor daraus errechneten zugehörigen Ergebniswerte enthält.

3. Prozessmessgerät nach Anspruch 1 oder 2, wobei die Verifizierung den direkten Vergleich des aus dem ersten Prozessor 21 ausgelesenen Ergebnisses mit dem Ergebnis aus der Durchführung des ersten Algorithmus durch den zweiten Prozessor (25) umfasst.

4. Prozessmessgerät nach einem der Ansprüche 1 bis 3, wobei der zweite Prozessor einen Programmspeicher umfasst und dazu vorgesehen ist, den Programmspeicher mittels einer Prüfsumme oder einem CRC zu verifizieren.

5. Prozessmessgerät nach einem der Ansprüche 1 bis 4, wobei der zweite Prozessor weiterhin einen Schreib/Lesespeicher aufweist, den der zweite Prozessor mittels Testpattern auf statische Fehler überprüfen kann.

6. Prozessmessgerät nach einem der Ansprüche 1 bis 5, wobei der zweite Prozessor einen Schreib/Lesespeicher aufweist, welchen der zweite Prozessor mittels Prüfalgorithmen auf statische Fehler überprüfen kann.

7. Prozessmessgerät nach einem der Ansprüche 1 bis 6, wobei der zweite Prozessor dazu vorgesehen ist, zu der Überprüfung auf statische Fehler die Daten im Programmspeicher des ersten Prozessors mit einem lokal gespiegelten Speicherbereich zu vergleichen und zu verifizieren.

8. Prozessmessgerät nach einem der Ansprüche 1 bis 7, wobei der zweite Prozessor dazu vorgesehen ist, bekannte Konstanten im Datenspeicher des ersten Prozessors durch Vergleich mit lokal gespiegelten Werten zu verifizieren.

9. Prozessmessgerät nach einem der Ansprüche 1 bis 8, wobei der zweite Prozessor dazu vorgesehen ist, Konfigurationsregister des ersten Prozessors durch Vergleich mit lokal gespiegelten Werten regelmäßig zu verifizieren.

10. Prozessmessgerät nach einem der Ansprüche 1 bis 9, wobei das Prozessmessgerät eine 4..20 mA Zweitdraht-Schnittstelle umfasst, und wobei eine Watchdog-Schaltung zum Überprüfen der Funktion des zweiten Prozessors und eines zugehörigen Taktgebers vorgesehen ist, um im Fehlerfall unabhängig von dem ersten Prozessor (21) und dem zweiten Prozessor (25) über den 4..20 mA Signalstrom einen Fehler zu signalisieren.

## Claims

1. A process-measuring apparatus with a first processor (21) for carrying out a measurement-value processing in first processing cycles with a first algorithm, **characterized by** a second processor (25) for performing co-ordination and/or communication tasks, wherein the second processor (25) is additionally provided with means for reading out a set of control data from the first processor (21) at time intervals which are longer than the first processing cycle, and for carrying out the first algorithm with reference to the set of control data, for verifying the correction function of the first processor.

2. A process-measuring apparatus according to Claim 1, wherein the set of control data contains raw measurement values of a sensor and status variables and the associated result values calculated from them by the first processor.

3. A process-measuring apparatus according to Claim 1 or 2, wherein the verification embraces the direct comparison of the result read out from the first processor 21 with the result from carrying out the first algorithm by the second processor (25).

4. A process-measuring apparatus according to any one of Claims 1 to 3, wherein the second processor comprises a program memory and is provided in order to verify the program memory by means of a check sum or a CRC.

5. A process-measuring apparatus according to any one of Claims 1 to 4, wherein the second processor additionally has a write / read memory which the second processor can check for static errors by means of test patterns.

6. A process-measuring apparatus according to any one of Claims 1 to 5, wherein the second processor has a write / read memory which the second processor can check for static errors by means of checking algorithms.

7. A process-measuring apparatus according to any one of Claims 1 to 6, wherein the second processor is provided in order to compare and to verify the data in the program memory of the first processor with a locally mirrored memory area for checking for static errors.

8. A process-measuring apparatus according to any one of Claims 1 to 7, wherein the second processor is provided in order to verify known constants in the data memory of the first processor by comparison with locally mirrored values.

9. A process-measuring apparatus according to any one of Claims 1 to 8, wherein the second processor is provided in order to verify configuration registers of the first processor by comparison with locally mirrored values in a regular manner.

10. A process-measuring apparatus according to any one of Claims 1 to 9, wherein the process-measuring apparatus comprises a 4..20 mA two-wire interface, and wherein a watchdog circuit is provided for checking the function of the second processor and an associated clock generator in order, in the event of an error, to signal an error by way of the 4..20 mA signal current independently of the first processor (21) and the second processor (25).

## Revendications

1. Appareil de mesure de process pourvu d'un premier processeur (21), lequel exécute, au moyen d'un premier algorithme, un traitement des valeurs mesurées au sein de premiers cycles de traitement, **caractérisé par** un deuxième processeur (25), lequel est chargé des tâches de coordination et/ou de communication, le deuxième processeur (25) étant en outre pourvu de moyens destinés à la lecture à partir du premier processeur (21) d'un bloc de données de contrôle à des intervalles de temps, qui sont supérieurs au premier cycle de traitement, et à l'exécution du premier algorithme sur la base du bloc de données de contrôle et à la vérification du bon fonctionnement du premier processeur (21).

2. Appareil de mesure de process selon la revendication 1, pour lequel le bloc de données de contrôle contient les valeurs brutes d'un capteur et des variables d'état, ainsi que les valeurs de résultat correspondantes, calculées par le premier processeur (21).

3. Appareil de mesure de process selon la revendication 1 ou 2, pour lequel la vérification consiste en une comparaison directe du résultat lu à partir du premier processeur (21) avec le résultat issu de l'exécution du premier algorithme par le deuxième processeur (25).

4. Appareil de mesure de process selon l'une des revendications 1 à 3, pour lequel le deuxième processeur (25) comprend une mémoire de programmes et est chargé de vérifier la mémoire de programmes au moyen d'un total de contrôle ou d'un CRC.

5. Appareil de mesure de process selon l'une des revendications 1 à 4, pour lequel le deuxième processeur (25) comprend en outre une mémoire d'écriture / de lecture, que le deuxième processeur (25) est en mesure de vérifier au moyen de séquences de test par rapport à des erreurs statiques.

6. Appareil de mesure de process selon l'une des revendications 1 à 5, pour lequel le deuxième processeur (25) comprend une mémoire d'écriture / de lecture, que le deuxième processeur (25) est en mesure de vérifier au moyen d'algorithmes de contrôle par rapport à des erreurs statiques

7. Appareil de mesure de process selon l'une des revendications 1 à 6, pour lequel le deuxième processeur (25) est chargé, en vue de la vérification d'erreurs statiques, de comparer et vérifier les données de la mémoire de programmes du premier processeur (21) par comparaison avec des valeurs "miroir" locales.

8. Appareil de mesure de process selon l'une des revendications 1 à 7, pour lequel le deuxième processeur (25) est chargé de vérifier des constantes connues de la mémoire de données du premier processeur (21) par comparaison avec des valeurs "miroir" locales

9. Appareil de mesure de process selon l'une des revendications 1 à 8, pour lequel le deuxième processeur (25) est chargé de vérifier régulièrement les registres de configuration du premier processeur (21) par comparaison avec des valeurs "miroir" locales.

10. Appareil de mesure de process selon l'une des revendications 1 à 9, l'appareil de mesure comprenant une interface bifilaire 4..20 mA, et pour lequel est prévu un circuit chien de garde destiné à vérifier le fonctionnement du deuxième processeur (25) et de l'horloge correspondante afin de signaler, en cas d'erreur, une erreur par l'intermédiaire du courant de signal 4..20 mA, indépendamment du premier processeur (21) et du deuxième processeur (25).
